# FASCICULE DE BREVET EUROPEEN

(11) **EP 2 858 882 B1**
(45) Date de publication et mention de la délivrance du brevet: **03.08.2016**
(21) Numéro de dépôt: 13729280.1
(22) Date de dépôt: 03.06.2013
(51) Int. Cl.: B62D 25/14

(54) **TRAVERSE DE PLANCHE DE BORD POUR VEHICULE**
QUERTRÄGER FÜR DAS ARMATURENBRETT EINES FAHRZEUGS
VEHICLE DASHBOARD CROSSMEMBER

(30) Priorité: 07.06.2012 FR 1255344
(43) Date de publication de la demande: 15.04.2015
(73) Titulaire: Peugeot Citroën Automobiles SA, 78140 Vélizy Villacoublay (FR); Faurecia Intérieur Industrie, 92000 Nanterre (FR)
(72) Inventeur: APPASAMY, Jean Michel, F-78760 Jouars Pontchartrain (FR); BRANCHERIAU, Christian, F-95220 Herblay (FR); DA COSTA PITO, Sergio, F-95800 Courdimanche (FR)
(74) Mandataire: Fosse, Danièle
(86) Numéro de dépôt international: PCT/EP2013/061391
(87) Numéro de publication internationale: WO 2013/182524

(56) Documents cités:
- EP-A2- 1 415 897
- EP-A2- 1 442 964
- US-A1- 2002 145 309

## Description

La présente invention revendique la priorité de la demande française 1255344 déposée le 7 juin 2012.

L'invention concerne une traverse de planche de bord pour véhicule, qui est conçue pour s'étendre transversalement au-dessous de la planche de bord, et qui comporte un corps central tubulaire transversal délimitant un premier trou à une première extrémité libre et un second trou à une seconde extrémité libre opposée, le corps central étant réalisé en matériau composite.

La traverse a notamment pour fonction le soutien de la planche de bord et de divers équipements, comme la colonne de direction, le dispositif de coussin gonflable, le pédalier, et divers équipements électriques.

De plus, la traverse permet de renforcer l'habitacle en résistant aux chocs frontaux et latéraux, lors d'un accident par exemple.

A cet effet, les différents éléments constituant la traverse doivent présenter une résistance mécanique élevée.

Le document US-A1-2011/285174 décrit et représente une traverse de véhicule automobile, composée notamment d'un corps transversal qui porte des inserts métalliques sur lesquels des éléments de retenue des équipements sont moulés par injection d'un premier thermoplastique et par injection d'un second thermoplastique, par exemple en composite.

De plus, la traverse comporte un premier et un second embout de fixation qui sont agencés à une première extrémité et à une seconde extrémité du corps et qui sont réalisés en thermoplastique par injection.

De façon générale, la traverse selon ce document est fabriquée selon une conception métal-plastique-composite.

Bien que la traverse décrite dans le document US-A1-2011/285174 semble former une architecture robuste, elle présente plusieurs inconvénients.

En effet, l'utilisation d'éléments métalliques, comme les inserts, augmente la masse de la traverse.

De plus, la fabrication d'une telle traverse est complexe, puisque les éléments de retenue et les embouts de fixation sont directement moulés par une première injection et une seconde injection, avec deux matériaux plastiques différents, sur le corps central.

Une telle conception ne semble pas adaptée à une traverse qui comporte un corps central de forme creuse tubulaire.

En effet, la matière injectée par surmoulage pour réaliser les embouts de fixation agencés aux extrémités libre du corps creux, risque de pénétrer à travers les trous formés aux extrémités du corps creux.

Par conséquence, les embouts sont susceptibles de présenter des défauts de fabrication et des zones d'affaiblissement mécanique. Enfin, selon ce document, rien n'est prévu pour garantir la rigidité et la raideur des embouts de fixation qui assurent la liaison de la traverse sur les piliers du véhicule.

L'invention vise notamment à pallier ces inconvénients en proposant une traverse dont la fabrication est favorisée et dont la raideur garantie une tenue vibratoire satisfaisante.

Dans ce but, l'invention concerne une traverse de planche de bord pour véhicule, qui est conçue pour s'étendre transversalement au-dessous de la planche de bord, et qui comporte un corps central tubulaire transversal délimitant un premier trou situé à une première extrémité libre, et un second trou situé à une seconde extrémité libre opposée du corps, ledit corps étant réalisé en matériau composite, caractérisée en ce que la traverse est équipée d'au moins un premier insert qui coopère avec la première extrémité du corps et qui comporte :
- une plaque intermédiaire qui est délimitée par une première face intérieure qui obture le premier trou du corps, et une seconde face extérieure,
- au moins un doigt de liaison qui s'étend transversalement depuis la première face de la plaque et qui coopère avec la première extrémité libre du corps, pour raccroder le premier insert sur le corps, et
- au moins une patte de fixation saillante qui s'étend depuis la seconde face de la plaque et qui est conçue pour raccorder la traverse sur un élément structurel du véhicule, et en ce que la traverse comporte une structure de renfort périphérique qui comporte au moins une portion formant une première équerre de fixation qui est surmoulée sur le premier insert et sur la première extrémité du corps de la traverse.

Ainsi, le premier insert obstrue le premier trou du corps pour empêcher à la matière de pénétrer dans le corps au cours du surmoulage de la structure de renfort formant la première équerre.

De plus, une telle conception comportant un renfort et une structure surmoulée sur le corps apporte de la rigidité structurelle à la traverse qui permet de transmettre des efforts importants entre la traverse et la structure du véhicule, tout en limitant les vibrations.

Selon une autre caractéristique, le premier insert comporte une pluralité de doigts de liaison qui délimitent entre eux un logement dans lequel la première extrémité associée du corps central est emmanchée transversalement, pour raccorder le premier insert sur le corps.

Cette caractéristique permet de renforcer la liaison mécanique entre le corps et la première équerre.

De plus, la première équerre et le premier insert sont réalisés en matériau composite.

Aussi, le corps central est réalisé par pultrusion ou par tressage tridimensionnel.

Complémentairement, la traverse comporte, un second insert qui coopère avec la seconde extrémité du corps, et la structure de renfort comporte au moins une portion formant une seconde équerre de fixation qui est surmoulée sur le second insert et sur la seconde extrémité du corps de la traverse.

De plus, la structure de renfort s'étend transversalement depuis le premier insert, jusqu'au second insert, de sorte que la première équerre et la seconde équerre sont réalisées par surmoulage en une seule pièce.

La traverse comporte au moins un élément supplémentaire de raccord qui est monté sur le corps de la traverse et qui est conçu pour raccordé la traverse sur un élément structurel du véhicule.

L'invention concerne aussi un procédé pour la réalisation d'une traverse de planche de bord pour véhicule, comportant un corps central transversal qui délimite un premier trou à une première extrémité libre et un second trou à une seconde extrémité libre opposée dudit corps, et qui est réalisé en matériau composite, et au moins une première équerre de fixation de la traverse sur la structure du véhicule, le corps central et la première équerre étant réalisés en matériau composite, caractérisé en ce qu'il comporte succéssivement au moins :
- une étape d'assemblage au cours de laquelle au moins un premier insert de renfort est monté sur la première extrémité du corps central de façon à obturer le premier trou du corps, et
- une étape de surmoulage qui consiste à surmouler une structure de renfort sur le corps central, de sorte que la structure de renfort forme ladite première équerre de fixation qui est surmoulée sur le premier insert et sur la première extrémité du corps de la traverse.

Selon une autre caractéristique, le procédé comporte une première étape de formation du corps par pultrusion.

De plus, le procédé comporte au moins une seconde étape de formation qui consiste à réaliser par thermoformage au moins le premier insert.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble éclatée en perspective, qui illustre la traverse selon l'invention comportant un corps central, un premier et un second éléments de fixation formant embout de fixation renforcés par un premier insert et un second insert de renfort ;
- la figure 2 est une vue d'ensemble en perspective, qui illustre la traverse de la figure 1 dans une configuration assemblée ;
- la figure 3 est une vue en section selon la ligne 3-3 de la figure 2, qui illustre le premier insert de la figure 1 et le premier élément de fixation associé qui sont fixés sur une équerre d'un premier pilier du véhicule ;
- la figure 4 est une vue en section selon la ligne 4-4 de la figure 2, qui illustre le corps central, le premier insert et la structure de renfort de la traverse.

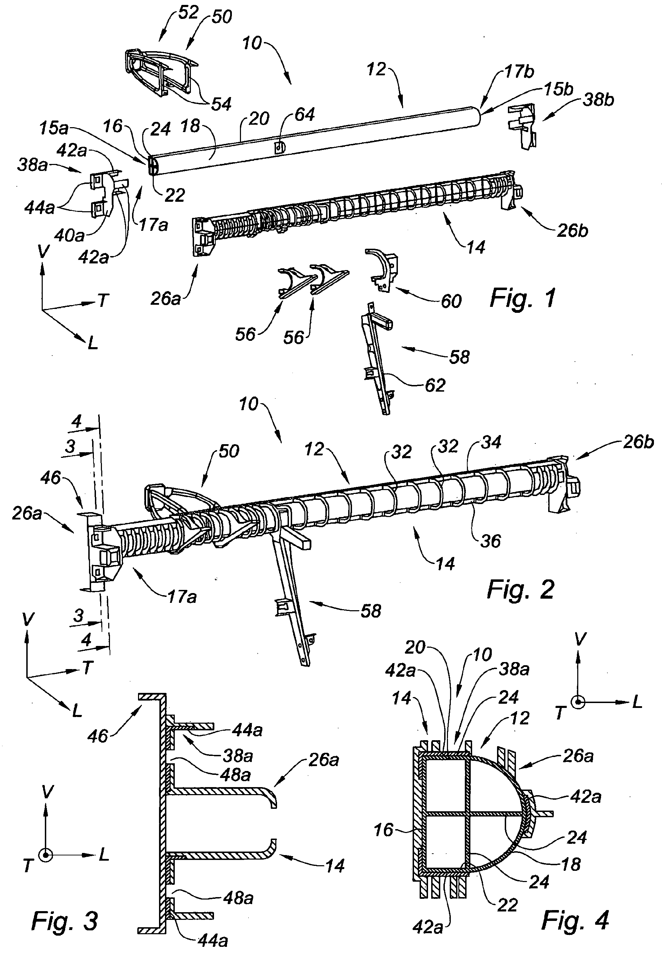

Dans la description et les revendications, on utilisera à titre non limitatif les expressions « supérieur » et « inférieur » en référence à la partie supérieure et à la partie inférieure respectivement des figures 1 à 4.

De même, on utilisera à titre non limitatif les expressions « avant » et « arrière » en référence à la partie gauche et à la partie droite respectivement de la figure 3.

De plus, pour clarifier la description et les revendications, on adoptera à titre non limitatif la terminologie longitudinal, vertical et transversal en référence au trièdre L, V, T indiqué aux figures.

On a représenté à la figure 1 une traverse 10 de planche de bord pour véhicule automobile, qui est conçue pour s'étendre transversalement à l'intérieur du véhicule depuis un premier pilier latéral jusqu'à un second pilier latéral opposé (non représentés).

La traverse 10 comporte un corps 12 central réalisé en matériau composite en une seule pièce, qui est renforcé par une structure de renfort 14 périphérique.

La traverse 10 est destinée à être agencée transversalement au-dessous de la planche de bord du véhicule pour supporter divers éléments, comme une colonne de direction, un dispositif de coussin gonflable, un pédalier, et des équipements électriques et électroniques.

On entend par direction transversale une direction perpendiculaire à la direction d'avancement longitudinale du véhicule.

De même, on entend par « matériau composite » un matériau qui est constitué d'un renfort qui assure la tenue mécanique et d'une matrice en matière plastique qui assure la cohésion.

La matière plastique est une résine thermoplastique ou thermodurcissable par exemple.

Le renfort peut se présenter sous forme de fibre longue ou courte, continue ou non continue. Ces fibres peuvent être des fibres de verre, de carbone ou d'aramide.

Selon l'exemple de réalisation décrit ici, le matériau composite qui constitue le corps 12 central comporte une matrice thermoplastique comme du polypropylène ou du polyamide, et un renfort en fibres continues, comme des fibres de verre et/ou des fibres de carbone et/ou des fibres d'aramide.

Comme on peut le voir aux figures 1 et 4, le corps 12 de la traverse 10 présente une forme tubulaire creuse qui délimite un premier trou 15a situé à une première extrémité 17a libre transversale, et un second trou 15b situé à une seconde extrémité 17b libre transversale opposée.

Le corps 12 présente une section longitudinale constante, comme une section circulaire, une section carrée ou tout type de sections complexes par exemple. A titre non limitatif, la section du corps 12 central peut être une section ouverte, comme une section en forme de U.

Toutefois, selon l'exemple de réalisation décrit ici, la section du corps 12 est une section en forme de D qui comporte une face verticale avant 16 plane orientée en regard de l'habitacle du véhicule et une face arrière 18 convexe bombée vers l'avant.

De plus, la face avant 16 et la face arrière 18 sont reliées entre elles par une face supérieure 20 et une face inférieure 22 qui s'étendent parallèlement entre elles selon une direction transversale.

En référence à la figure 4, le corps 12 de la traverse 10 comporte deux nervures 24 intérieures agencées en croix, formant renfort mécanique.

Les nervures 24 sont venues de matière avec le corps 12.

Le corps 12 de la traverse 10 est réalisé par pultrusion, notamment pour permettre de réaliser le corps 12 en matériau composite d'une forme tubulaire avec une section constante.

Dans un autre mode de réalisation le corps de traverse 10 est réalisé par tressage tridimensionnel.

Toutefois, à titre non limitatif, le corps 12 peut être réalisé par thermoformage, par exemple par déformation à chaud ou par compression à chaud.

Selon un autre aspect, la traverse 10 comporte une première équerre 26a et une seconde équerre 26b de fixation de la traverse 10 sur la structure du véhicule, qui sont agencées à la première extrémité 17a transversale et à la seconde extrémité 17b transversale opposées du corps 12 respectivement.

La première équerre 26a et la seconde équerre 26b sont réalisées en matériau composite avec la structure de renfort 14 périphérique, en une seule pièce.

Comme on peut le voir aux figures 1 et 21, la structure de renfort 14 est surmoulée sur le corps 12.

Le surmoulage permet à la structure de renfort 14 d'être liée mécaniquement au corps 12 central.

La structure de renfort 14 est réalisée en matériau composite comportant une matrice thermoplastique comme du polypropylène ou du polyamide, et un renfort, typiquement des fibres courtes, non continues, comme des fibres de verre et/ou des fibres de carbone.

Avantageusement, un tel matériau est en effet particulièrement adapté à une mise en forme par injection ou surmoulage sur le corps 12 central.

De plus, la structure de renfort 14 forme une gaine ajourée qui délimite une série de nervures 32 de renfort qui épousent la forme du corps 12 central et qui coopèrent avec la face arrière 18, la face supérieure 20 et la face inférieure 22 du corps 12 central.

Les nervures 32 sont jointes entre elles à l'avant du corps 12 par un premier segment 34 transversal supérieur et un second segment 36 transversal inférieur, comme le représente la figure 2.

Selon un autre aspect, la traverse 10 comporte un premier insert 38a et un second insert 38b de renfort qui coopèrent avec la première extrémité 17a et la seconde extrémité 17b du corps 12 respectivement.

Le premier insert 38a et le second insert 38b étant identiques, seul le premier insert 38a sera décrit en détail pour ne pas alourdir la description.

Comme le montre la figure 4, le premier insert 38a est interposé entre la première équerre 26a et le corps 12 central.

Selon la figure 1, le premier insert 38a constitue un premier embout comportant une plaque 40a intermédiaire verticale qui s'étend globalement perpendiculairement au corps 12 central de la traverse 10 et qui est délimitée par une première face intérieure qui obture le premier trou 15a du corps 12, et une seconde face extérieure.

De plus, le premier insert 38a comporte trois doigts 42a de liaison qui s'étendent transversalement vers l'avant depuis la première face de la plaque 40a et qui coopèrent avec la première extrémlité 17a libre du corps 12, pour raccroder le premier insert 38a sur le corps 12.

Les doigts 42a délimitent entre eux un logement dans lequel la première extrémité 17a associée du corps 12 central est emmanchée transversalement, comme on peut le voir à la figure 4.

De façon complémentaire, le premier insert 38a comporte deux pattes 44a de fixation qui s'étendent chacune transversalement vers l'arrière depuis la seconde face de la plaque 40a du premier insert 38a.

Les deux pattes 44a sont conçues pour fixer la traverse 10 sur une équerre 46, formant élément structurel du véhicule, qui est représentée aux figures 2 et 3.

A cet effet, selon la figure 3, les deux pattes 44a sont en appui longitudinal sur l'équerre 46 et les deux pattes 44a sont fixées sur l'équerre 46, par exemple par vissage à travers deux trous 48a de passage ménagés dans les deux pattes 44a.

L'équerre 46 est conçue pour être reliée sur la structure du véhicule, par exemple sur un premier pilier latéral du véhicule.

La première équerre 26a présente une forme qui est globalement complémentaire à la forme du premier insert 38a associé, la première équerre 26a enveloppant le premier insert 38a par surmoulage.

En effet, selon la figure 3, les deux pattes 44a du premier insert 38a sont noyées dans la première équerre 26a.

De même, selon la figure 4, les doigts 42a de liaison du premier insert 38a sont noyés dans la première équerre 26a associé formée par la structure 14.

Cette caractéristique assure une cohésion et une raideur à l'ensemble constitué par le corps 12, le premier insert 38a et la première équerre 26a.

Le premier insert 38a et le second insert 38b sont réalisés en matériau composite comportant une matrice thermoplastique comme du polypropylène ou du polyamide et un renfort, comme des fibres de verre et/ou des fibres de carbone.

Selon un autre aspect, la traverse 10 comporte une liaison 50 de traverse inférieure de baie, qui est notamment conçue pour supporter une partie des efforts de la colonne de direction.

La liaison 50 comporte un socle 52 en acier équipé de deux bras 54 qui coopèrent avec la face avant de la traverse 10.

Complémentairement, la liaison 50 comporte deux agraphes 56 qui sont fixées à l'extrémité libre des bras de la liaison 54 de façon à ensérer le corps 12 central de la traverse 10.

Les deux agraphes 56 sont réalisées en matériau composite comportant une matrice thermoplastique comme du polypropylène ou du polyamide, et un renfort, comme des fibres de verre et/ou des fibres de carbone.

De plus, la traverse 10 est équipée d'une jambe de force 58 qui comporte une portion concave 60 conçue pour coopérer avec la face arrière 18 du corps 12 central, et un pied 62 destiné à être raccordé à la structure du véhicule.

Complémentairement, le corps 12 délimite une encoche 64 pour la fixation de la portion concave 60 de la jambde de force 58.

La portion concave 60 est réalisée en matériau composite comportant une matrice thermoplastique comme du polypropylène ou du polyamide et un renfort, comme des fibres de verre et/ou des fibres de carbone.

De même, le pied 62 est réalisé en matériau composite comportant une matrice thermoplastique comme du polypropylène ou du polyamide, et un renfort, comme des fibres de verre et/ou des fibres de carbone.

A titre non limitatif, le pied 62 peut être réalisé en métal, de l'acier ou de l'aluminium par exemple.

L'invention concerne aussi un procédé procédé pour la réalisation de la traverse 10.

Le procédé comporte une première étape de formation du corps 12 par pultrusion.

A titre non limitatif, la première étape de formation du corps 12 peut consister à thermoformer le corps 12 par tout autre moyen pour lui donner sa forme finale, par exemple par compression.

De plus, le procédé comporte une seconde étape de formation qui consiste à réaliser par thermoformage le premier insert 38a, le second insert 38b, les des deux agrafes 56, le pied 62 et la portion concave 60 de la jambe de force 58, par exemple par compression ou préformage.

La seconde étape de formation consiste aussi à réaliser par emboutissage et soudage le socle 52 de la liaison 50 de traverse.

Le procédé comporte une première étape d'assemblage, consistant à agencer dans un moule le premier insert 38a et le second insert 38b qui sont montés aux extrémités transversales du corps 12 de façon à obturer le premier trou 15a et le second trou 15b du corps 12 tubulaire..

De plus, la première étape d'assemblage consiste à agencer dans le moule les deux agrafes 56 de la liaison 50 de traverse inférieure de baie sur le corps 12, et la portion concave 60 de la jambe de force 58, comme illustré à la figure 2.

En outre, le procédé comporte une étape de surmoulage qui consiste à surmouler la structure de renfort 14 sur le corps 12 central, de sorte que la structure de renfort 14 forme la première équerre 26a de fixation qui est surmoulée sur le premier insert 38a et sur la première extrémité 17a du corps 12, et la seconde équerre 26b de fixation qui est surmoulée sur le second insert 38b et sur la seconde extrémité 17b du corps 12.

Au cours de l'étape de surmoulage, les différents éléments agencés dans le moule sont chauffés, de sorte que ces différents éléments fusionnent entre eux par soudage.

La plaque 40a du premier insert 38a qui obture la première extrémité 17a du corps 12 central empêche la pénétration de matière plastique à l'intérieur du corps 12 au cours de l'étape de surmoulage.

Il en va de même pour l'insert 38b qui obture la seconde extrémité 17b du corps 12.

Suite au surmoulage, le corps 12, le premier insert 38a et la première équerre 26a sont liés entre eux mécaniquement.

De même, le corps 12, le second insert 38b et la seconde équerre 26b sont liés entre eux mécaniquement.

A la suite de l'étape de surmoulage, le procédé comporte une seconde étape d'assemblage qui consiste à assembler le pied 62 de la jambe de force sur la portion concave 60 associée, et le socle 52 de la liaison 50 de traverse sur les deux agrafes 56 associées.

La conception de la traverse 10 selon l'invention permet un passage des efforts en compression et en flexion entre la traverse et la structure du véhicule en cas de collision.

De plus, la raideur en torsion de la traverse 10 selon l'invention permet à la traverse une bonne tenue aux vibrations.

## Revendications

1. Traverse (10) de planche de bord pour véhicule, qui est conçue pour s'étendre transversalement au dessous de la planche de bord, et qui comporte un corps (12) central tubulaire transversal délimitant un premier trou (15a) situé à une première extrémité (17a) libre, et un second trou (15b) situé à une seconde extrémité (17b) libre opposée du corps (12), ledit corps (12) étant réalisé en matériau composite, **caractérisée en ce que** la traverse (10) est équipée d'au moins un premier insert (38a) qui coopère avec la première extrémité (17a) du corps (12) et qui comporte :
• une plaque (40a) intermédiaire qui est délimitée par une première face intérieure qui obture le premier trou (15a) du corps (12), et une seconde face extérieure,
• au moins un doigt de liaison (42a) qui s'étend transversalement depuis la première face de la plaque (40a) et qui coopère avec la première extrémité (17a) libre du corps (12), pour raccroder le premier insert (38a) sur le corps (12), et
• au moins une patte de fixation (44a) saillante qui s'étend depuis la seconde face de la plaque (40a) et qui est conçue pour raccorder la traverse (10) sur un élément structurel du véhicule,
et **en ce que** la traverse (10) comporte une structure de renfort (14) périphérique qui comporte au moins une portion formant une première équerre (26a) de fixation qui est surmoulée sur le premier insert (38a) et sur la première extrémité (17a) du corps (12) de la traverse (10).

2. Traverse (10) de planche de bord selon la revendication 1, **caractérisée en ce que** le premier insert (38a) comporte une pluralité de doigts de liaison (42a) qui délimitent entre eux un logement dans lequel la première extrémité (17a) associée du corps (12) central est emmanchée transversalement, pour raccorder le premier insert (38a) sur le corps (12).

3. Traverse (10) de planche de bord selon l'une quelconque des revendications précédentes, **caractérisée en ce que** la première équerre (26a) et le premier insert (38a) sont réalisés en matériau composite.

4. Traverse (10) de planche de bord selon l'une quelconque des revendications précédentes, **caractérisée en ce que** le corps (12) central est réalisé par pultrusion.

5. Traverse (10) de planche de bord selon l'une quelconque des revendications précédentes, **caractérisée en ce qu'**elle comporte un second insert (38b) qui coopère avec la seconde extrémité (17b) du corps (12), et **en ce que** la structure de renfort (14) comporte au moins une portion formant une seconde équerre (26b) de fixation qui est surmoulée sur le second insert (38b) et sur la seconde extrémité (17b) du corps (12) de la traverse (10).

6. Traverse (10) de planche de bord selon la revendication 5, **caractérisée en ce que** la structure de renfort (14) s'étend transversalement depuis le premier insert (38a), jusqu'au second insert (38b), de sorte que la première équerre (26a) et la seconde équerre (26b) sont réalisées par surmoulage en une seule pièce.

7. Traverse (10) de planche de bord selon l'une quelconque des revendications précédentes, **caractérisée en ce qu'**elle comporte au moins un élément (50, 58) supplémentaire de raccord qui est monté sur le corps (12) de la traverse (10) et qui est conçu pour raccordé la traverse (10) sur un élément structurel du véhicule.

8. Procédé pour la réalisation d'une traverse (10) de planche de bord pour véhicule, comportant un corps (12) central transversal qui délimite un premier trou (15a) à une première extrémité (17a) libre et un second trou (15b) à une seconde extrémité (17b) libre opposée dudit corps (12), et qui est réalisé en matériau composite, et au moins une première équerre (26a) de fixation de la traverse (10) sur la structure du véhicule, le corps (12) central et la première équerre (26a) étant réalisés en matériau composite, **caractérisé en ce qu'**il comporte succéssivement au moins :
• une étape d'assemblage au cours de laquelle au moins un premier insert (38a) de renfort est monté sur la première extrémité (17a) du corps (12) central de façon à obturer le premier trou (15a) du corps (12), et
• une étape de surmoulage qui consiste à surmouler une structure de renfort (14) sur le corps (12) central, de sorte que la structure de renfort (14) forme ladite première équerre (26a) de fixation qui est surmoulée sur le premier insert (38a) et sur la première extrémité (17a) du corps (12) de la traverse (10), ledit premier insert (38a) comportant: une plaque (40a) intermédiaire qui est délimitée par une première face intérieure qui obture le premier trou (15a) du corps (12), et une seconde face extérieure, au moins un doigt de liaison (42a) qui s'étend transversalement depuis la première face de la plaque (40a) et qui coopère avec la première extrémité (17a) libre du corps (12), pour raccroder le premier insert (38a) sur le corps (12), et au moins une patte de fixation (44a) saillante qui s'étend depuis la seconde face de la plaque (40a) et qui est conçue pour raccorder la traverse (10) sur un élément structurel du véhicule,

9. Procédé selon la revendication 8, **caractérisé en ce qu'**il comporte une première étape de formation du corps (12) par pultrusion.

10. Procédé selon l'une quelconque des revendications 8 et 9, **caractérisé en ce qu'**il comporte au moins une seconde étape de formation qui consiste à réaliser par thermoformage au moins le premier insert (38a).

## Patentansprüche

1. Querträger (10) eines Armaturenbretts für Fahrzeug, der konzipiert ist, um sich quer oberhalb des Armaturenbretts zu erstrecken, und der einen zentralen röhrenförmigen Querkörper (12) umfasst, der eine erste Öffnung (15a), die an einem ersten freien Ende (17a) liegt, und eine zweite Öffnung (15b), die an einem zweiten freien Ende (17b), das dem Körper (12) entgegengesetzt ist, abgrenzt, wobei der Körper (12) aus Verbundwerkstoff hergestellt ist, **dadurch gekennzeichnet, dass** der Querträger (10) mit mindestens einem Einsatz (38a) ausgestattet ist, der mit dem ersten Ende (17a) des Körpers (12) zusammenwirkt und Folgendes umfasst:
• eine Zwischenplatte (40a), die durch eine erste Innenseite, die die erste Öffnung (15a) des Körpers (12) verschließt, und eine zweite Außenseite abgegrenzt ist,
• mindestens einen Verbindungsfinger (42a), der sich quer von der ersten Seite der Platte (40a) erstreckt, und der mit dem ersten freien Ende (17a) des Körpers (12) zusammenwirkt, um den ersten Einsatz (38a) auf dem Körper (12) anzuschließen, und
• mindestens eine vorstehende Befestigungspratze (44a), die sich von der zweiten Seite der Platte (40a) erstreckt und die konzipiert ist, um den Querträger (10) auf einem Strukturelement des Fahrzeugs anzuschließen,
und dass der Querträger (10) eine umfängliche Verstärkungsstruktur (14) umfasst, die mindestens einen Abschnitt umfasst, der einen ersten Befestigungswinkel (26a) bildet, der auf dem ersten Einsatz (38a) und auf dem ersten Ende (17a) des Körpers (12) des Querträgers (10) übergeformt ist.

2. Querträger (10) eines Armaturenbretts nach Anspruch 1, **dadurch gekennzeichnet, dass** der erste Einsatz (38a) eine Mehrzahl von Verbindungsfingern (42a) umfasst, die untereinander eine Aufnahme abgrenzen, in der das erste Ende (17a), das mit dem zentralen Körper (12) assoziiert ist, quer aufgeschrumpft ist, um den ersten Einsatz (38a) auf dem Körper (12) anzuschließen.

3. Querträger (10) eines Armaturenbretts nach einem der vorhergehenden Ansprüche, **dadurch gekennzeichnet, dass** der erste Winkel (26a) und der erste Einsatz (38a) aus einem Verbundwerkstoff hergestellt sind.

4. Querträger (10) eines Armaturenbretts nach einem der vorhergehenden Ansprüche, **dadurch gekennzeichnet, dass** der zentrale Körper (12) durch Strangpressen hergestellt ist.

5. Querträger (10) eines Armaturenbretts nach einem der vorhergehenden Ansprüche, **dadurch gekennzeichnet, dass** er einen zweiten Einsatz (38b) umfasst, der mit dem zweiten Ende (17b) des Körpers (12) zusammenwirkt, und dass die Verstärkungsstruktur (14) mindestens einen Abschnitt umfasst, der einen zweiten Befestigungswinkel (26b) bildet, der auf dem zweiten Einsatz (38b) und auf dem zweiten Ende (17b) des Körpers (12) des Querträgers (10) übergeformt ist.

6. Querträger (10) eines Armaturenbretts nach Anspruch 5, **dadurch gekennzeichnet, dass** sich die Verstärkungsstruktur (14) quer ab dem ersten Einsatz (38a) bis zu dem zweiten Einsatz (38b) derart erstreckt, dass der erste Winkel (26a) und der zweite Winkel (26b) durch Überformen aus einem einzigen Stück hergestellt sind.

7. Querträger (10) eines Armaturenbretts nach einem der vorhergehenden Ansprüche, **dadurch gekennzeichnet, dass** er mindestens ein zusätzliches Anschlusselement (50, 58) umfasst, das auf den Körper (12) des Querträgers (10) montiert und ausgelegt ist, um den Querträger (10) auf einem Strukturelement des Fahrzeugs anzuschließen.

8. Verfahren zum Herstellen eines Querträgers (10) eines Armaturenbretts für Fahrzeug, der einen zentralen Querkörper (12) umfasst, der eine erste Öffnung (15a) an einem ersten freien Ende (17a) und eine zweite Öffnung (15b) an einem zweiten freien Ende (17b), das dem Körper (12) entgegengesetzt ist, abgrenzt, und der aus Verbundwerkstoff hergestellt ist, und mindestens einen ersten Befestigungswinkel (26a) des Querträgers (10) auf der Struktur des Fahrzeugs, wobei der zentrale Körper (12) und der erste Winkel (26a) aus Verbundwerkstoff hergestellt sind, **dadurch gekennzeichnet, dass** es ferner mindestens Folgendes umfasst:
• einen Schritt des Zusammenfügens, in dessen Verlauf mindestens ein erster Verstärkungseinsatz (38a) auf das erste Ende (17a) des zentralen Körpers (12) derart montiert ist, dass die erste Öffnung (15a) des Körpers (12) verschlossen wird, und
• einen Schritt des Überformens, der darin besteht, eine Verstärkungsstruktur (14) auf dem zentralen Körper (12) derart überzuformen, dass die Verstärkungsstruktur (14) den ersten Befestigungswinkel (26a) bildet, der auf dem ersten Einsatz (38a) und auf dem ersten Ende (17a) des Körpers (12) des Querträgers (10) übergeformt ist, wobei der erste Einsatz (38a) Folgendes umfasst: eine Zwischenplatte (40a), die durch eine erste Innenseite, die die erste Öffnung (15a) des Körpers (12) verschließt, und eine zweite Außenseite abgegrenzt ist, mindestens einen Verbindungsfinger (42a), der sich quer von der ersten Seite der Platte (40a) erstreckt, und der mit dem ersten freien Ende (17a) des Körpers (12) zusammenwirkt, um den ersten Einsatz (38a) auf dem Körper (12) anzuschließen, und mindestens eine vorstehende Befestigungspratze (44a), die sich von der zweiten Seite der Platte (40a) erstreckt, und die konzipiert ist, um den Querträger (10) auf einem Strukturelement des Fahrzeugs anzuschließen.

9. Verfahren nach Anspruch 8, **dadurch gekennzeichnet, dass** es einen ersten Schritt des Bildens des Körpers (12) durch Strangpressen umfasst.

10. Verfahren nach einem der Ansprüche 8 und 9, **dadurch gekennzeichnet, dass** es mindestens einen zweiten Schritt des Bildens umfasst, der darin besteht, durch Thermoformen mindestens den ersten Einsatz (38a) herzustellen.

## Claims

1. A vehicle dashboard crossmember (10), which is designed to extend transversely beneath the dashboard, and which comprises a central transverse tubular body (12) defining a first hole (15a) located at a first free end (17a), and a second hole (15b) located at a second opposite free end (17b) of the body (12), said body (12) being made of a composite material, **characterized in that** the crossmember (10) is provided with at least one first insert (38a) which engages with the first end (17a) of the body (12) and which comprises:
• an intermediate plate (40a) which is defined by a first inner surface which blocks the first hole (15a) of the body (12), and a second outer surface,
• at least one connecting pin (42a) which extends transversely from the first surface of the plate (40a) and which cooperates with the first free end (17a) of the body (12), to connect the first insert (38a) on the body (12), and
• at least one projecting attachment lug (44a) which extends from the second surface of the plate (40a) and which is designed to connect the crossmember (10) on a structural element of the vehicle
and **in that** the crossmember (10) comprises a peripheral reinforcement structure (14), which comprises at least one portion forming a first attachment bracket (26a), which is over-moulded onto the first insert (38a) and onto the first end (17a) of the body (12) of the crossmember (10).

2. The dashboard crossmember (10) according to Claim 1, **characterized in that** the first insert (38a) comprises a plurality of connecting pins (42a) which define between them a housing in which the first end (17a) associated with the central body (12) is shrunk on transversely, to connect the first insert (38a) on the body (12).

3. The dashboard crossmember (10) according to any one of the preceding claims, **characterized in that** the first bracket (26a) and the first insert (38a) are made of a composite material.

4. The dashboard crossmember (10) according to any one of the preceding claims, **characterized in that** the central body (12) is made by pultrusion.

5. The dashboard crossmember (10) according to any one of the preceding claims, **characterized in that** it comprises a second insert (38b) which engages with the second end (17b) of the body (12), and **in that** the reinforcement structure (14) comprises at least one portion forming a second attachment bracket (26b) which is overmoulded onto the second insert (38b) and onto the second end (17b) of the body (12) of the crossmember (10).

6. The dashboard crossmember (10) according to Claim 5, **characterized in that** the reinforcement structure (14) extends transversely from the first insert (38a), up to the second insert (38b), such that the first bracket (26a) and the second bracket (26b) are realized by overmoulding in a single piece.

7. The dashboard crossmember (10) according to any one of the preceding claims, **characterized in that** it comprises at least one supplementary connection element (50, 58) which is mounted on the body (12) of the crossmember (10) and which is designed to connect the crossmember (10) on a structural element of the vehicle.

8. A method for the realization of a vehicle dashboard crossmember (10), comprising a central transverse body (12) which defines a first hole (15a) at a first free end (17a), and a second hole (15b) at a second opposite free end (17b) of the said body (12), and which is made of a composite material, and at least one first attachment bracket (26a) of the crossmember (10) on the structure of the vehicle, the central body (12) and the first bracket (26a) being made of a composite material, **characterized in that** it comprises successively at least:
• an assembly step, during which at least a first reinforcement insert (38a) is mounted on the first end (17a) of the central body (12) so as to block the first hole (15a) of the body (12), and
• an overmoulding step, which consists in overmoulding a reinforcement structure (14) onto the central body (12), such that the reinforcement structure (14) forms the said first attachment bracket (26a) which is overmoulded onto the first insert (38a) and onto the first end (17a) of the body (12) of the crossmember (10), said first insert (38a) comprising: an intermediate plate (40a) which is defined by a first inner surface which blocks the first hole (15a) of the body (12), and a second outer surface, at least one connecting pin (42a) which extends transversely from the first surface of the plate (40a) and which engages with the first free end (17a) of the body (12), to connect the first insert (38a) on the body (12), and at least one projecting attachment lug (44a) which extends from the second surface of the plate (40a) and which is designed to connect the crossmember (10) on a structural element of the vehicle.

9. The method according to Claim 8, **characterized in that** it comprises a first formation step of the body (12) by pultrusion.

10. The method according to any one of Claims 8 and 9, **characterized in that** it comprises at least one second formation step which consists in realizing at least the first insert (38a) by thermoforming.
